# EUROPEAN PATENT APPLICATION

(11) **EP 3 521 071 A1**
(43) Date of publication of application: **07.08.2019**
(21) Application number: 19155787.5
(22) Date of filing: 06.02.2019
(51) Int. Cl.: B60D 1/64, B60D 1/62, B60T 7/20, B60T 13/26

(54) **EQUIPMENT FOR SERVICES INTERCONNECTIONS OF TRACTOR-TRAILER COMBINATIONS**

(30) Priority: 31.01.2018 GB 201801607
(71) Applicant: Fluid Power Design Limited, Grantham, Buckinghamshire NG31 7LE (GB)
(72) Inventor: Turley, Edward Paul, Peterborough, Cambridgeshire PE8 6XH (GB)
(74) Representative: Coles, Graham Frederick

(57) **Abstract**

Equipment for establishing a brake-lock facility of a tractor-trailer combination has a ground access coupling system in which movement of a beam arm (11) carrying a services-connector of the ground access coupling system towards deployment beyond a side of the tractor-trailer combination, is automatically precluded by a latching device (10,12,15,16) until brakes of the trailer have been applied by the venting of a park valve (1). The latching precludes movement of the beam arm (11) in the direction for deployment (D), but not in the opposite direction, and is released in response to slow venting of a pneumatic latching cylinder (9) via a restriction (8) into the park valve (1) or into a venting path (6) from the park valve (1) for application of the trailer brakes.

## Description

This invention relates to equipment for services interconnections of tractor-trailer combinations.

Equipment of this nature is conventionally mounted on the trailer for use in establishing necessary connections between the tractor and trailer when the trailer is coupled to the tractor. The interconnections are established to the equipment on the front of the trailer via individual electrical, pneumatic-hose and other flexible connector lines that extend (normally in coiled extendable form) from the back of the driver's cab or other location of the tractor to be plugged into sockets or otherwise connected to the equipment on the front of the trailer when the tractor and trailer are coupled together.

In order to avoid the necessity for the driver or other person when connecting or disconnecting the interconnection, to clamber onto the tractor-trailer combination between the tractor and the trailer, it is common for the sockets and other connectors of the interconnection equipment to be mounted on a moveable services-connector plate. The plate is retained in a central, 'normal' or 'running' location when the tractor-trailer is moving or the trailer is parked, but is moveable laterally from this location across the front of the trailer into an 'extended', or 'deployed' location to one side of the trailer whenever connections to it are to be established or otherwise changed. Deployment makes the connector-plate more readily accessible to the driver or other person without requiring them to clamber or lean excessively into the space between the tractor and trailer to make the change.

More particularly, the services-connector plate may be mounted on a beam arm which is slidable or otherwise moveable relative to the mounting of the equipment, to locate the plate outwardly, and desirably downwardly, beyond the side of the tractor-trailer combination at a height and distance that enables the driver or other person comfortable and ready-access to the connector-plate while standing on the ground alongside the tractor-trailer combination. Systems having these features are referred to generally herein as 'ground access coupling systems', and are commonly accompanied by a brake-lock facility that is operated manually when the beam arm carrying the services-connector plate is deployed. The purpose of operation of this facility is to lock the brakes of the trailer on, and thereby stop the trailer from moving and creating a danger for the system operator and others.

The brake-lock facility is commonly provided using a so-called 'park valve' that is included in the pneumatic circuit controlling the brakes of the trailer and is operated manually by the driver or other operator, by pulling out a plunger of the valve from its normal pushed-in condition. This pulling out of the plunger vents air pressure from the park valve so as to apply the trailer brakes; the pulled-out condition of the plunger is identified herein as being the 'venting' condition of the park valve as distinct from its 'pressurised' condition adopted with the plunger pushed fully-in.

It is an object of the present invention to provide equipment for services interconnections of tractor-trailer combinations having a ground access coupling system, of improved form.

According to the present invention there is provided equipment for establishing a brake-lock facility of a tractor-trailer combination having a ground access coupling system, wherein movement of a beam arm carrying a services-connector of the ground access coupling system towards deployment beyond the side of the tractor-trailer combination, is automatically precluded until the trailer brakes have been applied.

Latching means for latching the beam arm against movement towards deployment may be released from latching the beam arm against movement towards deployment until the trailer brakes have been applied. The latching means may be released in response to venting of a pneumatic latching cylinder, and the venting operation of the pneumatic latching cylinder may be via a restriction, for example a small orifice, that slows that venting operation. The orifice may have has a diameter of 1mm.

The latching means may preclude movement of the beam arm towards deployment, but may allow movement of it in the opposite direction before release.

The equipment of the invention may include a park valve for venting to apply the trailer brakes, and in these circumstances a pneumatic latching cylinder as referred to above, may be coupled pneumatically to the park valve to be vented with venting of the park valve in application of the trailer brakes. In these circumstances the venting of the pneumatic latching cylinder may be into the park valve for venting with venting of the park valve or, in the alternative, may be into a venting path to the brakes from the park valve.

Equipment for establishing a brake-lock facility of a tractor-trailer combination having a ground access coupling system, will now be described, by way of example, with reference to the accompanying drawings, in which:
Figure 1 is illustrative of pneumatic connections associated with the brake-lock facility of the ground access coupling system of the present invention;
Figure 2 illustrates a locking or latching mechanism of the brake-lock facility associated with a beam arm of the ground access coupling system of Figure 1 (this figure shows the back of the mechanism as viewed from the front of the trailer);
Figure 3 is illustrative of the mechanism of Figure 2 during an initial, first stage of release of the locking or latching of the beam arm; and
Figure 4 is illustrative of the mechanism of Figures 2 and 3 initially, and also later during deployment and retraction respectively of the beam arm when it is extended about 50mm from the locked condition.

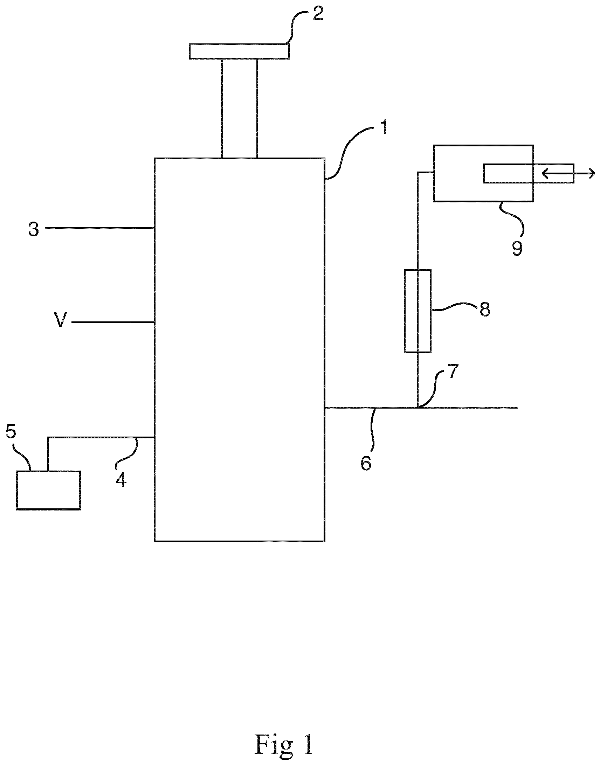

Referring to Figure 1, a park valve 1 of the pneumatic circuit of the trailer of a tractor-trailer combination that is fitted with a ground access coupling system, has a plunger 2 and vent V, and is connected (from its port normally nominated "P") via an air-line 3 to a so-called "red" connection of the services connection plate (not shown) of the ground access coupling system. Also, the valve 1 is connected within the trailer (from its normally-nominated No "1" port) via a line 4 to an air cylinder 5, and via a hose or other line 6 (from the normally-nominated No "2" port) to the trailer air brakes (not shown); some park valves have only one port instead of separate ports "P" and "1".

A spur or tee-connection 7 from the hose or other line 6 is coupled via a restrictor 8 to a pneumatic cylinder 9. The restrictor 8 is in the form of a small orifice (for example having a diameter of 1mm). The ideal position of the orifice would be to machine it directly into the side of the park valve 1 itself, at a position accessing the output chamber to which the hose or other line is connected; this would eliminate the need to use the spur or tee-connection 7 and would reduce the volume of air in the pneumatic cylinder.

The commonly-adopted pneumatic braking technique applies in the described system, so that air is supplied to the trailer brakes from an air cylinder via the valve 1 to release the brakes, and is exhausted from the brake cylinders in order to apply them under the action of springs. By way of example only, air of some 8 bar is applied to the line 6 from the valve 1 to hold the brakes released, and is vented to atmospheric pressure for full engagement of the parking brakes.

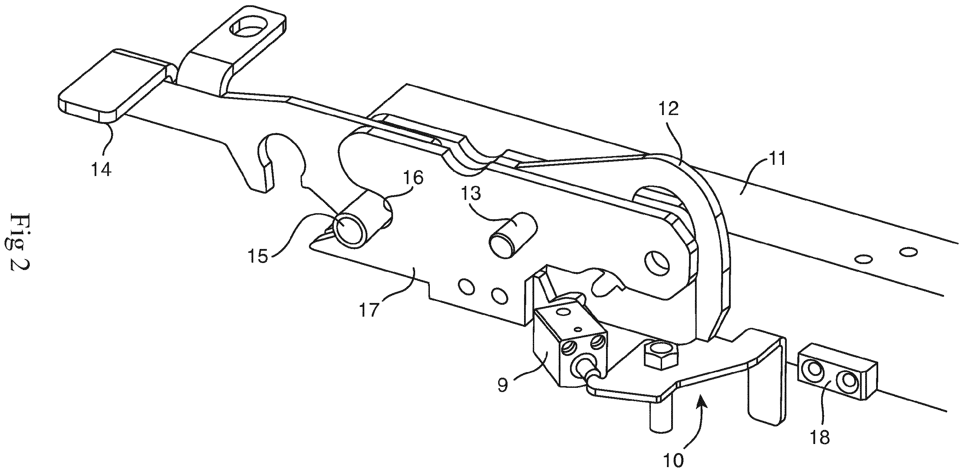

Referring now also to Figure 2, the cylinder 9 responds to reduction of air pressure to it to vent air within it, so as to release a spring-mounted pivoted latch 10 so as to permit release of a beam arm 11 carrying the service-connector plate of the ground access system.

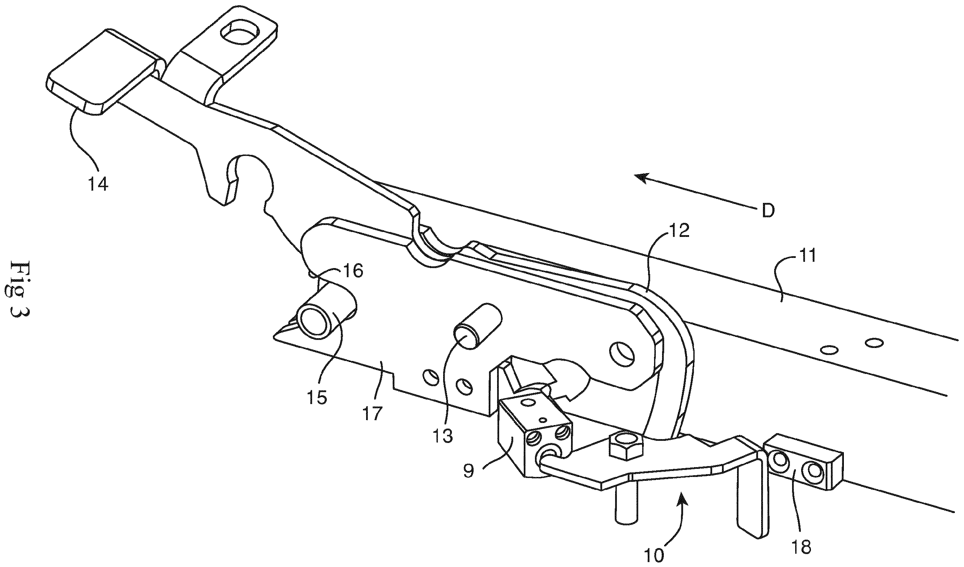

The pivoted latch 10 is shown in Figure 3 with the angular displacement it adopts when released by the cylinder 9. This displacement frees a locking arm 12 from obstruction by the latch 10, allowing the arm 12 to be pivoted about a pivot 13 down below the latch 10 as illustrated in Figure 3. The arm 12 has a finger plate 14 at one end that when lifted by the driver or other operator of the tractor-trailer combination releases the beam arm 11 for outward longitudinal deployment (in the direction of the arrow D of Figure 3) by disengaging a lock bar 15 from its engagement in a socket 16 of a fixed back-plate 17.

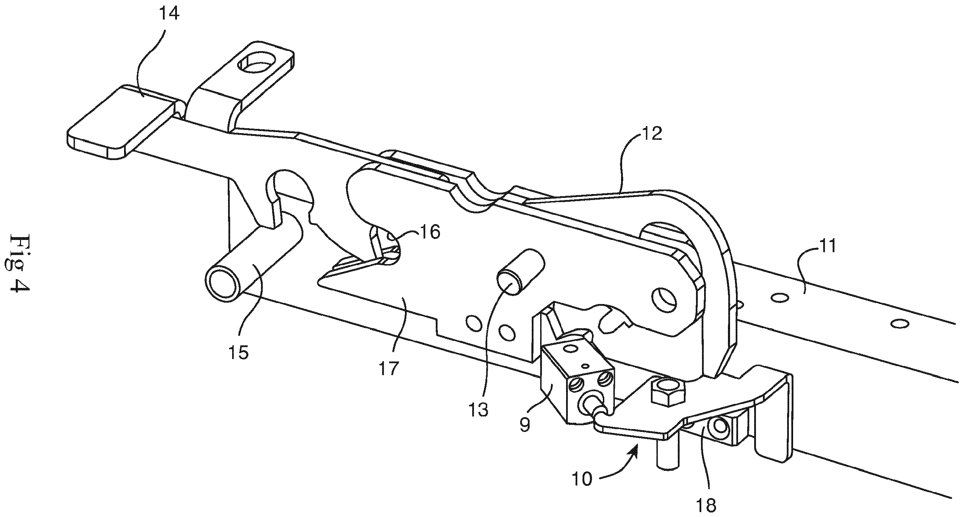

Figure 4 illustrates the condition that applies initially during the process of deployment of the beam arm 1 when the beam is extended about 50mm from the locked condition of Figures 2 and 3; it is also correspondingly illustrative of a condition late in retraction of the beam arm from its deployment. More especially, it is illustrative of a feature of the mechanism which ensures that in the event that the park valve 1 is vented while the beam 11 is in an extended position, the equipment will be free to lock back into the normal running position, and that it does this even if the driver or other operator has deliberately bypassed a gravity latch (described below). In this regard, an interference block 18 is attached to the beam arm 11 and as the beam arm 11 is retracted serves to push open the pivot latch 10 allowing the arm 12 to pivot about its pivot 13 as the lock bar 15 re-engages the socket 16 on return to the fully retracted condition of the beam arm 11.

The use of the restrictor 8 is important for achieving a fail-safe condition of the brake-lock facility. The main objective is to make the orifice sufficiently small that any air leakage from the braking system due to failure or damage to the cylinder 9 or its connecting hose, is sufficiently low that the braking system and/or operation of the park valve 1 are not affected. However, the orifice does need to be big enough to allow the air to flow through it to be quick enough to operate the pneumatic cylinder 9 in a timely manner, in order that there is no delay between the park valve 1 being operated and the cylinder 9 responding.

From experimental observation, this delay appears to result primarily from retraction of the spring force evacuating the cylinder 9, as well as air pressure difference between the valve 1 and the cylinder 9, whereas extension of the cylinder 9 occurred almost instantaneously even with an orifice below 0.5mm diameter. Through experimentation it has been found that with smaller cylinders 9 it is possible to reduce the size of the orifice of the restrictor 8 down to approximately 0.5mm diameter, and achieve retraction of the cylinder 9 of less than one second. Using an orifice with a diameter of 1mm, there was no measurable drop in air pressure in the braking system on connection of the 'red' air line 3, even when the pneumatic cylinder 9 was completely removed; this simulates a failure in which there is leakage of air freely from the cylinder.

The system of the present invention is extremely cost effective to manufacture and overcomes all of the downfalls in the methods in the present context currently available on the market. It also completely removes one point of failure on the trailer of prior-art components of the prior art - namely of a pneumatic "3/2" valve and a possible alternative electronic proximity sensor which are clear points of failure that could completely disable the trailer if they were to malfunction - by contrast if the park-valve system of the present invention as described above, were to malfunction, it would disable only the ground coupling function on the front of the trailer. Fundamentally moreover, if the parking brakes are not engaged, the ground access coupling system cannot be extended outwardly to the side of the trailer.

The system of the invention may include a so-called gravity latch in the form of a pivoted plate that moves into an activated condition over the pushed-in plunger 2, thereby blocking the plunger 2 from being pulled out, when the beam arm 11 carrying the services-connector plate begins to move out towards deployment. This ensures that the park valve 1 cannot be vented until the beam arm 11 is returned to its normal, retracted condition.

## Claims

1. Equipment for establishing a brake-lock facility of a tractor-trailer combination having a ground access coupling system, wherein movement of a beam arm carrying a services-connector of the ground access coupling system towards deployment beyond the side of the tractor-trailer combination, is automatically precluded until the trailer brakes have been applied.

2. Equipment according to claim 1 wherein latching means for latching the beam arm against movement towards deployment is released from latching the beam arm against movement towards deployment until the trailer brakes have been applied.

3. Equipment according to claim 2 wherein the latching means is released in response to venting of a pneumatic latching cylinder.

4. Equipment according to claim 3 wherein the venting operation of the pneumatic latching cylinder is via a restriction that slows that venting operation.

5. Equipment according to claim 4 wherein the restriction comprises a small orifice.

6. Equipment according to claim 5 wherein the orifice has a diameter of 1mm.

7. Equipment according to any one of claims 2 to 6 wherein the latching means precludes movement of the beam arm towards deployment but allows movement of it in the opposite direction before release.

8. Equipment according to any one of claims 3 to 7 including a park valve for venting to apply the trailer brakes, wherein the pneumatic latching cylinder is coupled pneumatically to the park valve to be vented with venting of the park valve in application of the trailer brakes.

9. Equipment according to claim 8 wherein the venting of the pneumatic latching cylinder is into the park valve for venting with venting of the park valve or, in the alternative, is into a venting path to the brakes from the park valve.

10. Equipment according to any one of claims 1 to 9 including a park valve for venting to apply the trailer brakes, wherein movement of the beam arm towards deployment is precluded until the park valve has been vented.
